# EUROPEAN PATENT APPLICATION

(11) **EP 4 280 122 A1**
(43) Date of publication of application: **22.11.2023**
(21) Application number: 22174365.1
(22) Date of filing: 19.05.2022
(51) Int. Cl.: G06N 5/04, G06N 20/00

(54) **ACTIONABLE ADVICE FOR THE OPTIMIZATION OF PROCESS SYSTEMS**

(71) Applicant: Siemens Energy Global GmbH & Co. KG, 81739 München (DE); Bull SAS, 78340 Les Clayes-sous-Bois (FR)
(72) Inventor: Blendinger, Stefan, 90768 Fürth (DE); Krawczak, Jacek, 01-938 Warszawa (PL); Mahendran, Ranjith, 94469 Deggendorf (DE)

(57) **Abstract**

The present invention relates to a computer implemented method for creating actionable advice for an optimization of a target variable of a process system, the process system comprising dependent and independent variables, the method comprising the steps of:
- deriving a target curve of the target variable along a working envelope of the process system,
- classifying data points of the target variable into a first and a second class depending on a position of the respective data points with respect to the target curve of the target variable,
- training a classifier to distinguish between the first and the second class for the target variable using independent variables,
- reading actual sensor data of the independent variables,
- selecting at least one independent variable of the variables having the most influence on the target variable,
- creating a ceteris paribus profile for the at least one selected independent variable to predict if and how the dependent target variable would change if the value of the at least one selected independent variable changed, and
- creating actionable advice for a direction of shift of the at least one selected independent variable to optimize the target variable.

The present invention also relates to a data processing system comprising means for carrying out the inventive method. Finally, the present invention relates to a computer program product.

## Description

The present invention relates to a computer implemented method enabling higher interpretability of machine learning results and make suggestions to an operator of the process system to act on it. It also relates to a corresponding data processing system as well as a computer program.

In complex process systems the operator might realize an efficiency drop or a loss of quality, but often he has no information what to do or where to search to improve the efficiency again. It will basically depend on his knowledge and experience with this process system whether he finds measures to improve it again. Depending on the experience of the operator with this system, he either does not detect the efficiency diminishing or he starts gathering the necessary information and data from the different available systems (e.g., control system, handbooks, maintenance plans...) and decides what to do. This consumes a lot of time, the information is incomplete and sometimes it doesn't even work out.

It is the object of the invention to provide better decision-making aids for the user of complex process systems. Another object of the invention is to provide a corresponding device for data processing. Finally, it is an object of the invention to provide a corresponding computer program product.

As preparation for the method according to the invention, independent variables are selected that relate to the process system using expert and domain knowledge to define variables with a higher correlation to the dependent target variable. The invention solves the problem related to a computer implemented method for creating actionable advice for an optimization of a target variable of a process system, the process system comprising dependent and independent variables, the method comprising the steps of:
- deriving a target curve of the target variable along a working envelope of the process system,
- classifying data points of the target variable into a first and a second class depending on a position of the respective data points with respect to the target curve of the target variable,
- training a classifier to distinguish between the first and the second class for the target variable using independent variables,
- reading actual sensor data of the independent variables,
- selecting at least one independent variable of the variables having the most influence on the target variable,
- creating a ceteris paribus profile for the at least one selected independent variable to predict if and how the dependent target variable would change if the value of the at least one selected independent variable changed, and
- creating actionable advice for a direction of shift of the at least one selected independent variable to optimize the target variable.

According to the invention the performance of a process system is analysed by comparing a current performance with previous performances and identifying the process system's performance deterioration e.g., by identifying classes of the process system performance. This gives a good overview of the process system's actual performance and serves as the basis for an actionable advice for changing individual parameters to come closer to an optimum of the process system.

In a preferred embodiment of the invention the optimal curve of the dependent target variable is derived by
- bucketing data points of the target variable along a working envelope,
- creating single values per bucket,
- deriving a first curve along the working envelope of the target variable from these single values per bucket with the help of interpolation functions and
- selecting data points of the bucketized data points where the process system performed best and fitting a curve through these data points while maintaining the shape of the first curve, to determine the target curve accordingly.

Bucketing or binning data is a technique that can reduce the impact of minor measurement errors and the amount of data that needs to be processed. The original data values which fall into a given small interval, a bucket, are replaced by a value representative of that bucket.

In another embodiment the values per bucket are obtained by a measure of central tendency e.g., one of arithmetic mean, median, and mode, the measure providing a central or typical value for a probability distribution related to a bucket.

These discrete values (buckets) reflecting historical operations of the process system are a good starting point for deriving a likewise discrete curve along a working envelope of the dependent target variable of the process system. The final shape of the target curve is then obtained with the help of interpolation functions.

The curve shape obtained in this way still must be adjusted to reflect optimal operation, e.g., shift up or down, after all, the data of a non-optimal operation were also part of the buckets. Therefore, a further step of the inventive method is to select data points of the bucketized data points where the process system performed best and to fit a curve through these data points while maintaining the shape of the curve, to determine the target curve accordingly.

According to one aspect of the invention once the target curve is known a classifier is trained to distinguish between the defined classes. Data are typically collected as a function of time. Thus, there is a link between the data of the target variable and other variables of the process system. If, e.g., it is known for the target variable that the determined value was good at a certain point in time, this assessment can be transferred to the other variables for this very point in time.

In principle, it is advantageous to know as many influencing parameters as possible. However, it is not very helpful to optimize parameters whose influence on the target curve is negligible or even non-existent. Another embodiment of the inventive method therefore makes use of recursive feature selection to identify variables that have the greatest influence on the dependent target variable instead of, as is usually the case, utilizing domain expertise.

According to the invention ceteris paribus profiles of the selected variables that have the greatest influence on the dependent target variable are derived. Such profiles show how a model's prediction would change if the value of a single selected variable is changed, while all others are kept constant, to be able to determine the influence of the selected variables regarding the effects of changes in the dependent target parameter. Especially interesting is the reference to the direction of shift of the respective independent variable to approach the target curve of the dependent target variable.

Any assessment can only be as good as the data on which it is based. Advantageously, before the above analysis takes place, the raw data is screened for outliers and these outliers are removed. According to an aspect of the invention reliable data points of the target variable are selected by transforming available data points of the target variable with nonlinear correlations to data points with linear correlations, if needed.

A transformation of available data points with nonlinear correlations to data points with linear correlation can be done by principal component analysis, where first and second principal components are calculated to rotate a coordinate system to get a highest variance of data for the first principal component.

Further, those data points which are closest to a coordinate line of the first component are selected, thus having the lowest values of the second principal component. For example, 95% of the data are used for further.

As far as the measurement data for a current analysis is concerned, these are usually collected with the help of sensors located at selected points in the process system. A process data acquisition for a current analysis of the process system realises the continuous observation of the process system by recording suitable process data (temperature, pressure, speed, etc.) by means of sensors in combination with external data (time, position (GPS data), input parameters, environmental parameters, etc.).

A preferred embodiment includes a data processing system comprising means for carrying out the above-presented method comprising the following steps:
- selecting reliable data points,
- deriving a target curve,
- creating classes of data points and a classifier for other process data and
- creating actionable advice.

Another preferred embodiment includes a computer program product comprising instructions which, when the program is executed by a computer, cause the computer to carry out the following steps:
- selecting reliable data points,
- deriving a target curve,
- creating classes of data points and a classifier for other process data and
- creating actionable advice.

The present invention provides to the operator of e.g., a vessel actual values like efficiency and power produced and additionally shows the actual value of efficiency influencing process parameters. The invention provides direction of shift of the different independent variables (e.g., increase pressure, decrease speed, reduce temperature) to get closer to the target range on the dependent variable (e.g., towards lowest specific fuel oil consumption (SFOC) for this operation point).

This data driven approach works independently from the professional experience of the operator. It does not require detailed knowledge of how the system is working. Particularly for complex process systems, the invention enables a higher interpretability of the machine learning results and the measures based on them.

Compared to physical modelling, the logic is trained on real world data from the actual operation of the system and requires no assumptions, dependencies etc.

The system can be easily updated to changes (e.g., switch low sulphur fuel, retrofitting of scrubbers).

The present invention can be used, for example, to reduce emissions or fuel consumption when operating a vessel.

### Brief description of the drawings

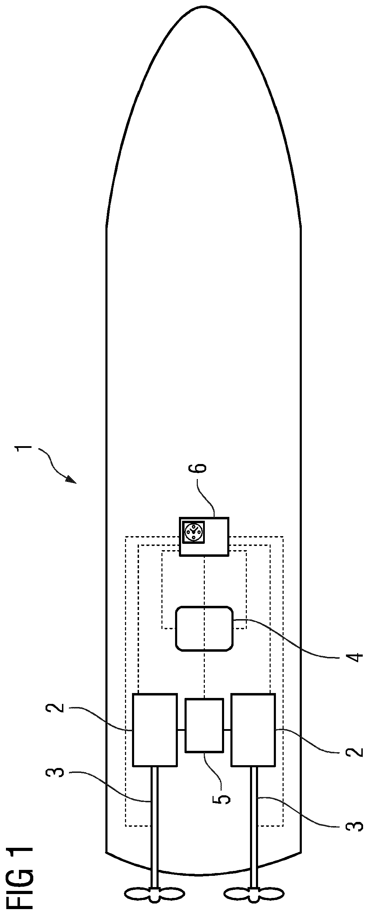

- FIG. 1: shows a vessel as an example of a process system,
- FIG. 2: is a flowchart illustrating the method for creating actionable advice for an optimization of a target variable of a process system according to the invention,
- FIG. 3: shows an example of engine SFOC curve generation,
- FIG. 4: shows an initial classification of performance with an SFOC target curve of a main engine and classes,
- FIG. 5: shows an example for a ceteris paribus profile of an independent variable.

The following disclosure provides an example for a computer implemented method for creating actionable advice for the optimization of a process system, such as a vessel, a corresponding data processing system and a computer program product.

This example is described to help clarify the invention and is not intended to limit the invention from that described in the claims. Well-known elements or details that are within the skills of persons of ordinary skill in the relevant art are presented without detailed description.

The present example is about the efficiency of a main propulsion of a vessel 1. More than 55% of the operational expenditures of a vessel 1 typically result from the fuel consumption of the main engine 2. Even a small efficiency drop of a few percent results in a huge impact on the OPEX.

The process system in this example consists of a two-stroke marine main engine 2 including powertrains 3, a fuel tank 4 and auxiliaries 5 (e.g., cooling, lubrication, turbo charger). The method is implemented in the data processing system 6. The target parameter is a low Specific Fuel Oil Consumption (SFOC).

By applying the inventive method, the chief engineer and his technical crew is supported by getting an early indication of an SFOC increase and receive actionable advice to counteract.

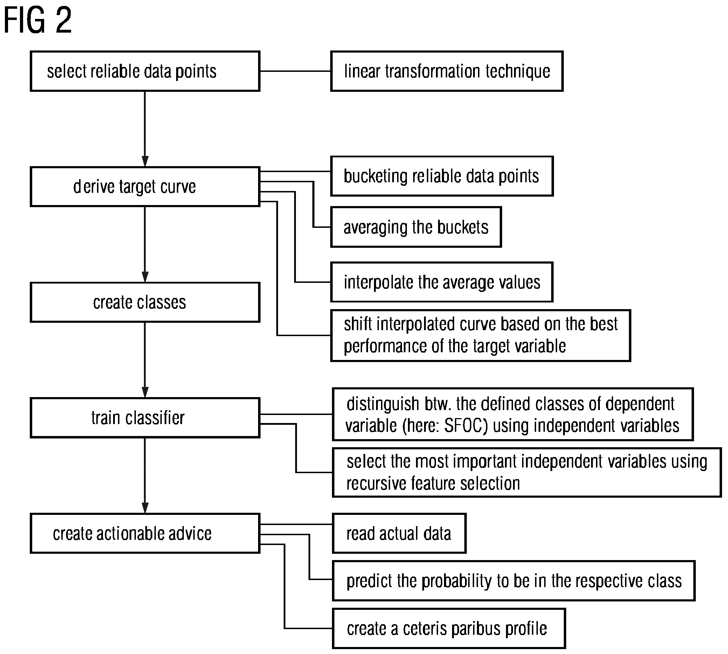

Figure 2 gives an overview of the process according to the invention with all necessary and further useful process steps starting with the selection of reliable data, followed by the derivation of the target curve, the definition of the classes of the measurement data, the training of the classifier up to the actionable advice for the operator. This and the respective sub-steps are described in detail below.

In the present example of a vessel, the focus is on variables that are related to fuel consumption and engine power to derive the optimal - means lowest - SFOC target curve, e.g., fuel consumption, engine power, shaft torque, RPM, engine load, etc.

Outliers must now be removed from this data and from the remaining data the most reliable ones are selected. For this purpose, a linear transformation technique is applied, e.g., the principal component analysis, where principal components are computed and used to perform a change of basis on the data, sometimes using only the first few principal components and ignoring the rest. In the simplest case this includes the calculation of the first and second principal components to rotate the coordinate system to obtain the highest variance of data for the first principal component.

Then, a majority (e.g., 95%) of reliable data points is selected. The closer the data points are to the axis of the first principal component, i.e., the lower their value for the second principal component, the more reliable they are.

After having selected reliable data points, an optimal SFOC curve (SFOC over main engine power), generally referred to as the target curve, is derived from them.

In the present embodiment of the invention the curve is created for a subset of the data because the SFOC ranges vary depending on the type of fuel used. This subset is now grouped into engine power buckets, i.e., the data set is divided into smaller groups. This process is called bucketing or binning. In the present example the main engine power is divided into equally spaced buckets of 1000 kW for the operation range of the engine. Now the data points of each bucket are averaged so that a single SFOC value is assigned to each power bucket. The single values per bucket are obtained by a measure of central tendency. The measure of central tendency is one of arithmetic mean, median, and mode.

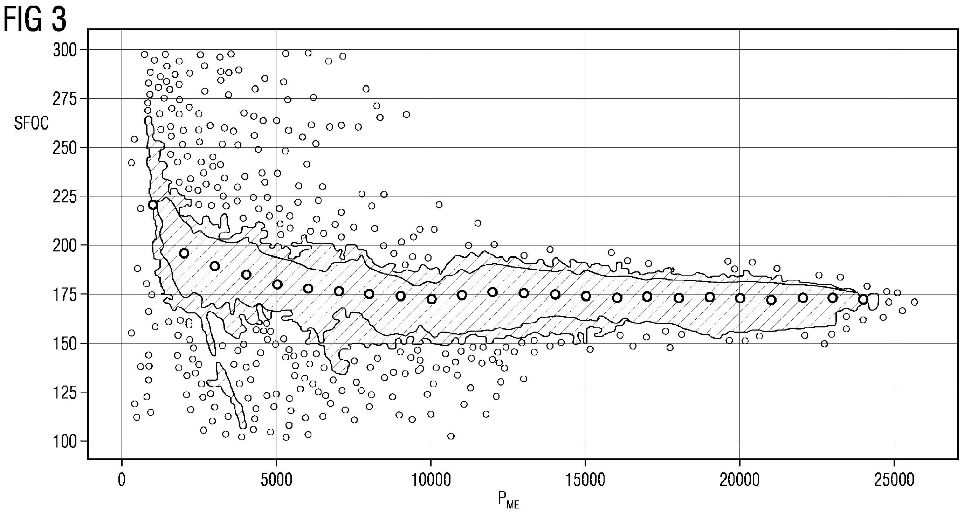

Figure 3 shows an example of a subset (due to different fuels) of a data set of SFOC as a "cloud" plotted against the main engine power P_{ME}. The respective SFOC values per bucket generated from this are shown as individual points.

When connecting these individual points, a curve with partly strong curvatures at these points is obtained, which is not suitable for the present purposes. Therefore, a first curve along the working envelope of the target variable is obtained from these single points per bucket with the help of interpolation functions.

The optimal SFOC curve, i.e., the target curve, is obtained by shifting the first SFOC curve. The magnitude of this shift can be determined by selecting data points from the engine power buckets where the process system performed best and by fitting a curve through these data points while retaining the shape of the first curve to determine the target curve accordingly.

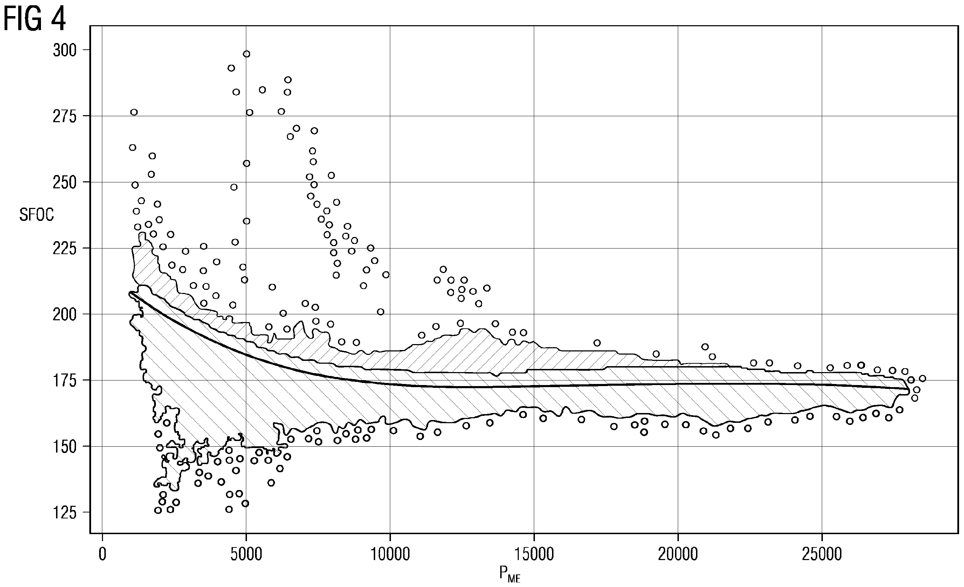

Finally, this target curve is used for the classification of the engine performance. The SFOC data are classified with the help of expert knowledge into classes that indicate the performance of the engine. It is classified into two classes of Good and Bad performance. The datapoints slightly above and below the SFOC target curve are classified as good performance and the rest as bad performance. Figure 4 shows an example of classified engine SFOC performance based on the SFOC target curve for the first main engine.

A classifier is trained to distinguish between the first class and the second class (dependent variable, here: SFOC) using independent variables (e.g., cooling water temperature, turbo charger speed, etc.). To select the most important independent variables recursive feature elimination is used (instead of utilizing domain expertise).

To create an actionable advice for a direction of shift of one of the independent variables to optimize the target variable first, actual sensor data (independent variables) are read and their probability to be in the respective class is predicted.

For the most important independent variables a ceteris paribus profile is created showing how a model's prediction would change when the value of one independent variable changes at a time.

A direction of shift of the different independent variables (i.e., increase pressure, speed, reduce temperature, optimizing load...) is provided to get closer to the target range on the dependent variable (i.e., to move closer to the target SFOC for this operation point). In other words: an indication on changes required to lower the SFOC is given.

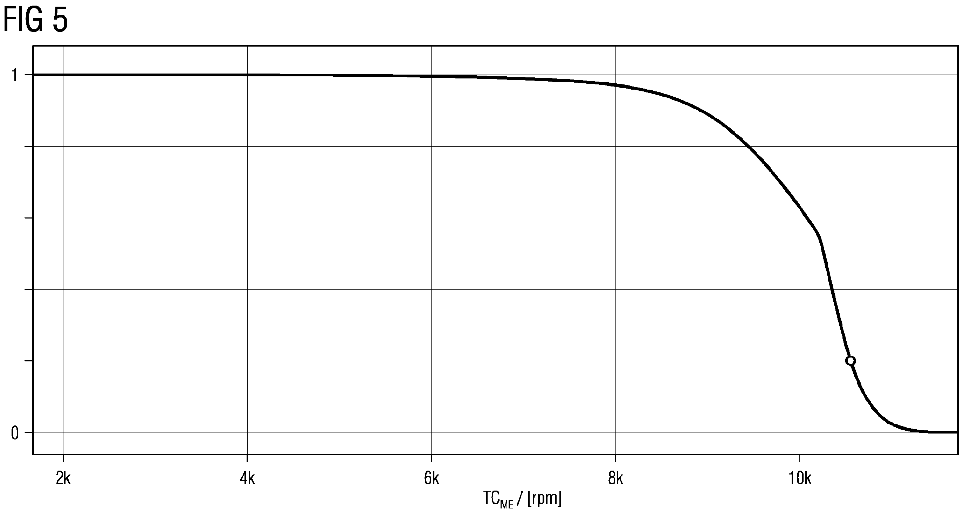

Figure 5 shows a ceteris paribus profile of the main engine turbo charger affecting the SFOC. The horizontal axis shows a range of possible values of the factor that is changed (in the present example, the rotational speed) while all others are kept constant. The vertical axis shows the probability for the SFOC. The dot indicates the value of the factor in this instance and the line shows a prediction for other values of the factor. A higher probability value in the prediction indicates a good SFOC class.

## Claims

1. A computer implemented method for creating actionable advice for an optimization of a target variable of a process system, the process system comprising dependent and independent variables, the method comprising the steps of:
- deriving a target curve of the target variable along a working envelope of the process system,
- classifying data points of the target variable into a first and a second class depending on a position of the respective data points with respect to the target curve of the target variable,
- training a classifier to distinguish between the first and the second class for the target variable using independent variables,
- reading actual sensor data of the independent variables,
- selecting at least one independent variable of the variables having the most influence on the target variable,
- creating a ceteris paribus profile for the at least one selected independent variable to predict if and how the dependent target variable would change if the value of the at least one selected independent variable changed, and
- creating actionable advice for a direction of shift of the at least one selected independent variable to optimize the target variable.

2. The computer implemented method according to claim 1, wherein the target curve is derived by
- bucketing data points of the target variable along a working envelope,
- creating single values per bucket,
- deriving a first curve along the working envelope of the target variable from these single values per bucket with the help of interpolation functions and
- selecting data points of the bucketized data points where the process system performed best and fitting a curve through these data points while maintaining the shape of the first curve, to determine the target curve accordingly.

3. The computer implemented method according to claim 2, wherein the single values per bucket are obtained by a measure of central tendency.

4. The computer implemented method according to claim 3, wherein the measure of central tendency is one of arithmetic mean, median, and mode.

5. The computer implemented method according to claim 1, wherein recursive feature selection is used to select at least one independent variable of the variables having the most influence on the target variable.

6. The computer implemented method according to the preceding claims, wherein reliable data points of the target variable are selected by transforming available data points of the target variable with nonlinear correlations to data points with linear correlations.

7. The computer implemented method according to claim 6, wherein the data points of the target variable with nonlinear correlations are transformed to data points with linear correlation by principal component analysis, where first and second principal components are calculated to rotate a coordinate system to get a highest variance of data for the first principal component.

8. The computer implemented method according to claim 7, wherein those data points of the target variable are selected which are closest to a coordinate line of the first component, thus having the lowest values of the second principal component.

9. The computer implemented method according to claim 8, wherein at most 95% of the data points are selected.

10. The computer implemented method according to the preceding claims, wherein process data are obtained via sensors.

11. A data processing system comprising means for carrying out the method according to the preceding claims comprising the following steps:
- deriving a target curve of the target variable along a working envelope of the process system,
- classifying data points of the target variable into a first and a second class depending on a position of the respective data points with respect to the target curve of the target variable,
- training a classifier to distinguish between the first and the second class for the target variable using independent variables,
- reading actual sensor data of the independent variables,
- selecting at least one independent variable of the variables having the most influence on the target variable,
- creating a ceteris paribus profile for the at least one selected independent variable to predict if and how the dependent target variable would change if the value of the at least one selected independent variable changed, and
- creating actionable advice for a direction of shift of the at least one selected independent variable to optimize the target variable.

12. A computer program product comprising instructions which, when the program is executed by a computer, cause the computer to carry out the following steps:
- deriving a target curve of the target variable along a working envelope of the process system,
- classifying data points of the target variable into a first and a second class depending on a position of the respective data points with respect to the target curve of the target variable,
- training a classifier to distinguish between the first and the second class for the target variable using independent variables,
- reading actual sensor data of the independent variables,
- selecting at least one independent variable of the variables having the most influence on the target variable,
- creating a ceteris paribus profile for the at least one selected independent variable to predict if and how the dependent target variable would change if the value of the at least one selected independent variable changed, and
- creating actionable advice for a direction of shift of the at least one selected independent variable to optimize the target variable.
